# EUROPÄISCHE PATENTANMELDUNG

(11) **EP 4 617 218 A1**
(43) Veröffentlichungstag der Anmeldung: **17.09.2025**
(21) Anmeldenummer: 25161829.4
(22) Anmeldetag: 05.03.2025
(51) Int. Cl.: B66B 15/04, F16H 55/48

(54) **LAUFROLLE FÜR EIN ZUGMITTEL**

(30) Priorität: 11.03.2024 AT 322024
(71) Anmelder: Faigle Kunststoffe GmbH, 6971 Hard (AT)
(72) Erfinder: Kienreich, Tobias, 6912 Hörbranz (AT)
(74) Vertreter: Torggler & Hofmann Patentanwälte - Rankweil

(57) **Zusammenfassung**

Laufrolle für ein Zugmittel (2) eines Aufzugs mit zumindest einem Lager (3), einem Grundkörper (4) und einem einen ersten Kunststoff aufweisenden Laufflächenmantel (5), wobei das zumindest eine Lager (3) durch den Grundkörper (4) gehalten ist, wobei zwischen dem Grundkörper (4) und dem Laufflächenmantel (5) eine mit dem Grundkörper (4) und dem Laufflächenmantel (5) verbundene Zwischenschicht (6) vorhanden ist, wobei die Zwischenschicht (6) einen sich vom ersten Kunststoff unterscheidenden zweiten Kunststoff beinhaltet. (Fig. 1b)

## Beschreibung

Die vorliegende Erfindung betrifft eine Laufrolle für ein Zugmittel eines Aufzugs gemäß den Merkmalen des Oberbegriffs des Anspruchs 1, einen Aufzug sowie ein Verfahren zum Herstellen einer Laufrolle.

Laufrollen und teils Herstellverfahren für dieselben sind offenbart in der EP 2679532 A1, der WO 2020234172 A1, der WO 90/04730 A1, der EP 2684831 A1, der EP 1902994 A1, der WO 02/46086 A1 sowie der GB 1121220.

Gemäß dem Stand der Technik kann die Laufrolle einen Grundkörper und einen einen ersten Kunststoff aufweisenden Laufflächenmantel aufweisen, wobei das zumindest eine Lager durch den Grundkörper gehalten ist.

In vielen Fällen ist bei modernen Aufzügen ein Laufflächenmantel aus Kunststoff gewünscht, da Kunststoffe mittels Spritzgießen effizient verarbeitet werden können und leicht sind. Um ganz spezifische Eigenschaften des Laufflächenmantels oder der Lauffläche selbst zu erzielen, können die Kunststoffe für den Laufflächenmantel spezifisch gewählt werden. Beispielsweise kann so eine besonders geringe Reibung oder eine gewisse Dämpfung erzielt werden.

Herausfordernd ist dabei in vielen Fällen, die Verarbeitung auch exotischer Kunststoffe mit hoher Prozesssicherheit und Zuverlässigkeit, sodass sich die gewünschten Eigenschaften des Laufflächenmantels auch tatsächlich einstellen.

Aufgabe der Erfindung ist es daher, eine Laufrolle für einen Aufzug und ein Herstellverfahren für eine Laufrolle für einen Aufzug anzugeben, wobei zuverlässig gewünschte Eigenschaften erzielt werden können, insbesondere eine geringe Reibung.

Hinsichtlich der Laufrolle wird dies durch die Merkmale des Kennzeichens des Anspruchs 1 gelöst, nämlich indem zwischen dem Grundkörper und dem Laufflächenmantel eine mit dem Grundkörper und dem Laufflächenmantel verbundene Zwischenschicht vorhanden ist, wobei die Zwischenschicht einen sich vom ersten Kunststoff des Laufflächenmantels unterscheidenden zweiten Kunststoff beinhaltet.

Hinsichtlich des Verfahrens wird die Aufgabe durch die Merkmale des Anspruchs 15 gelöst, nämlich durch die folgenden Schritte:
- Bereitstellen eines Grundkörpers, bevorzugt samt zumindest einem darin montierten oder zu montierenden Lager,
- Fertigen eines Laufflächenmantels zumindest teilweise aus einem ersten Kunststoff sowie
- Fertigen einer Zwischenschicht zwischen dem Grundkörper und dem Laufflächenmantel zumindest teilweise aus einem sich vom ersten Kunststoff unterscheidenden zweiten Kunststoff.

Durch das erfindungsgemäße Vorsehen einer mit dem Grundkörper und dem Laufflächenmantel verbundenen Zwischenschicht kann die Herstellung des Grundkörpers von derjenigen des Laufflächenmantels entkoppelt werden. Dadurch kann die Laufrolle zuverlässig gefertigt werden, selbst wenn die physikalischen Eigenschaften des Laufflächenmantels inkompatibel sind mit jenen des Grundkörpers.

Die Verbindungen der Materialien können form- oder kraftschlüssig sein oder durch physikalische und/oder chemische Bindung (stoffschlüssig) entstehen.

Beispielsweise wenn das Material des Laufflächenmantels - anders als das Material des Grundkörpers - eine besonders starke Schwindung aufweist, kann dies durch die Zwischenschicht kompensiert werden. Versuche der Anmelderin haben beispielsweise ergeben, dass der Laufflächenmantel reißen kann, falls das Material des Laufflächenmantels eine starke Schwindung aufweist, während das Material des Grundkörpers nicht oder weniger schwindet, weil im Laufflächenmantel starke innere Spannungen verbleiben, die im Einsatz die Festigkeit des Laufflächenmantels überwinden können.

Beispielsweise wenn das Material des Laufflächenmantels mit dem Material des Grundkörpers nur eine ungenügende Haft eingeht, kann durch eine Zwischenschicht in gewissen Ausführungen erreicht werden, dass die Zwischenschicht sowohl mit dem Grundkörper als auch mit dem Laufflächenmantel eine Verbindung (stoffschlüssig und/oder kraftschlüssig und/oder formschlüssig) eingeht, die eine genügende Festigkeit aufweist.

Gemäß der Erfindung ist die Zwischenschicht direkt mit dem Grundkörper und des Laufflächenmantel verbunden, sodass an den Kontaktflächen zwischen der Zwischenschicht und dem Grundkörper beziehungsweise dem Laufflächenmantel allenfalls ein Haftvermittler, aber nicht etwa weitere Zwischenschichten vorhanden sind.

Besonders bevorzugt ist der Grundkörper einstückig / monolithisch aus einem Material hergestellt, wobei beispielsweise mehrlagige Ausführungen grundsätzlich auch denkbar sind.

Der Laufflächenmantel kann den Grundkörper und die Zwischenschicht bevorzugt in umlaufender Richtung vollständig umgeben und/oder bedecken.

Der Laufflächenmantel kann den Grundkörper und die Zwischenschicht bevorzugt in einem axialen Querschnitt betrachtet vollständig umgeben und/oder bedecken.

Besonders bevorzugt kann es vorgesehen sein, dass der Laufflächenmantel durch die Zwischenschicht vollflächig vom Grundkörper beabstandet ist.

Das Material des Grundkörpers kann bevorzugt Metall, insbesondere Stahl, oder auch ein Kunststoff sein.

Als zumindest ein Lager kann beispielsweise ein Wälzlager oder mehrere Wälzlager zum Einsatz kommen, wobei auch Gleitlagerungen denkbar sind.

Die Funktion des Grundkörpers ist das Halten des zumindest einen Lagers.

In besonders bevorzugten Ausführungsformen kann der Laufflächenmantel aus einem anderen Material als die Zwischenschicht bestehen.

Darunter, dass sich der erste Kunststoff vom zweiten Kunststoff unterscheidet, kann bevorzugt verstanden werden, dass der erste Kunststoff und der zweite Kunststoff nicht identisch sind. Besonders bevorzugt, kann es sich beim zweiten Kunststoff um eine andere Kunststoffart als beim ersten Kunststoff handeln, beispielsweise kann der erste Kunststoff ein Polyethylen sein und der zweite Kunststoff ein Polyamid.

Die erfindungsgemäßen Verfahrensschritte zum Herstellen der Laufrolle müssen nicht unbedingt in der oben angegebenen Reihenfolge durchgeführt werden.

Beispielsweise könnte die Fertigung der Zwischenschicht auch vor der Fertigung des Laufflächenmantels und/oder Bereitstellung des Grundkörpers geschehen.

Analog kann die Fertigung der Zwischenschicht und/oder der Fertigung des Laufflächenmantels auch vor der Breitstellung des Grundkörpers geschehen.

Bevorzugt werden die Verfahrensschritte aber in der angegebenen Reihenfolge durchgeführt.

Das Montieren der zumindest einen Lagers im Grundkörper kann vor, während oder nach dem Durchführen des erfindungsgemäßen Verfahrens zum Herstellen der Laufrolle geschehen.

Schutz begehrt wird außerdem für einen Aufzug mit zumindest einer erfindungsgemäßen Laufrolle.

Die Erfindung kann in Verbindung mit allen Arten von Aufzügen, insbesondere Personenaufzügen und Lastenaufzügen, eingesetzt werden.

Die Laufrolle ist besonders bevorzugt frei laufend, das heißt, nicht angetrieben.

Vorteilhafte Weiterbildungen der Erfindung sind in den abhängigen Ansprüchen definiert.

Der erste Kunststoff kann bevorzugt ein thermoplastischer Kunststoff, beispielsweise ein Polyethylen, besonders bevorzugt ein ultrahochmolekulares Polyethylen, sein. Ultrahochmolekulares Polyethylen zeichnet sich durch besonders geringe Reibung aus. Besonders bevorzugt kann es sich um ein ultrahochmolekulares Polyethylen (PE-UHMW) und/oder ultrahoch dichtes Polyethylen (PE-UHD) handeln, das auch als PE-UHMW bezeichnet wird.

Alternativ oder zusätzlich können als erster Kunststoff insbesondere ein Polyolefin, ein Polyoxymehtylen (POM, auch genannt Polyacetal), ein Polyamid (PA), ein Polyethylenterephthalat (PET), ein Polybutylenterephthalat (PBT), ein thermoplastisches Elastomer (TPE), ein Polyketon (PK), ein Fluorpolymer (beispielsweise ein Polytetrafluorethylen, PTFE) und/oder ein Polyetherimid (PEI) und/oder ein Polyester (PES) zum Einsatz kommen.

Alternativ oder zusätzlich kann als erster Kunststoff ein duroplastischer Kunststoff, beispielsweise ein Phenolharz, ein Polyesterharz, und/oder ein Silikon zum Einsatz kommen.

Alternativ oder zusätzlich kann als erster Kunststoff ein Elastomer, beispielsweise ein Polyurethan (PU) und/oder ein Ethylen-Propylen-Dien Kautschuk (EPDM) zum Einsatz kommen.

Der Laufflächenmantel kann zu mehr als 50 %, bevorzugt mehr als 75 %, besonders bevorzugt mehr als 90 % und ganz besonders bevorzugt mehr als 99 %, aus dem ersten Kunststoff besteht.

Der zweite Kunststoff kann ein thermoplastischer Kunststoff, bevorzugt ein Polyamid, besonders bevorzugt ein recycliertes Polyamid, sein.

Die Zwischensicht kann zu mehr als 20 %, bevorzugt mehr als 30 % und besonders bevorzugt mehr als 40 %, aus dem zweiten Kunststoff bestehen.

Die Zwischenschicht kann zu weniger als 80 %, bevorzugt weniger als 70% und besonders bevorzugt weniger als 60 %, aus dem zweiten Kunststoff bestehen.

Besonders bevorzugt kann die Zwischenschicht gewichtsmäßig zu etwas gleichen Teilen aus dem zweiten Kunststoff und dem Füllstoff bestehen.

Der erste Kunststoff und/oder der zweite Kunststoff kann bevorzugt ein durch Spritzgießen verarbeitbarer Kunststoff sein.

Die Zwischenschicht kann bevorzugt einen Füllstoff aufweisen, besonders bevorzugt in Form einer Glasfaserfüllung.

Der erste Kunststoff und/oder der zweite Kunststoff kann einen oder mehrere Zusätze enthalten, beispielsweise zum Modifizieren der tribologischen Eigenschaften. Beispiele wären ein Trockenschmierstoff, ein Silikonöl, ein tribologisch wirksames Additiv oder ein mineralischer Füllstoff.

Der Grundkörper kann eine umlaufende Mulde beinhalten, in welcher die Zwischenschicht und/oder der Laufflächenmantel zumindest teilweise angeordnet ist. Dadurch kann der Laufflächenmantel und/oder die Zwischenschicht auf formschlüssige Weise mit dem Grundkörper verbunden werden / sein.

Analog kann der Laufflächenmantel zumindest teilweise in einer umlaufenden Vertiefung der Zwischenschicht angeordnet sein, um den Laufflächenmantel formschlüssig mit der Zwischenschicht zu verbinden.

Eine darüber hinausgehende stoffschlüssige und/oder kraftschlüssige Verbindung des Laufflächenmantels an der Zwischensicht oder der Zwischenschicht am Grundkörper ist im Rahmen der Erfindung nicht ausgeschlossen.

Natürlich können statt einer einzigen umlaufenden Mulde oder umlaufenden Vertiefung auch mehrere umlaufende Mulden und/oder mehrere umlaufenden Vertiefungen verwendet werden.

Das zumindest eine Lager kann in den Grundkörper integriert sein. Anders formuliert, kann ein Außenring des zumindest einen Lagers den Grundkörper bilden.

Der Laufflächenmantel kann eine Lauffläche beinhalten, die bevorzugt ein erstes Keilprofil beinhaltet oder anders strukturiert ist.

Grundsätzlich können im Rahmen der Erfindung aber auch Flachriemen zum Einsatz kommen, die kein Profil aufweisen.

Ein mit der zumindest einen Laufrolle zusammenwirkendes Zugmittel kann zumindest ein Stahlseil beinhalten, das bevorzugt in einen Riemen eingebettet ist.

Das Zugmittel in Form des zumindest einen Stahlseils kann ummantelt sein.

Der Riemen kann ein Innenprofil beinhalten, welches mit der Lauffläche des Laufflächenmantels zusammenwirkt.

Das Innenprofil kann ein zweites Keilprofil beinhalten.

Die Lauffläche korrespondiert mit dem Innenprofil, bevorzugt wobei das erste Keilprofil mit dem zweiten Keilprofil korrespondiert.

In gewissen Ausführungsformen beinhaltet die Lauffläche ein erstes Keilprofil, welches mit einem oder mehreren Stahlseilen als Zugmittel kooperiert, wobei sich die Stahlseile in den Vertiefungen des ersten Keilprofils befinden können.

Das erste und/oder das zweite Keilprofil kann bevorzugt eine Mehrzahl an Keilen beinhalten, die im Querschnitt beispielsweise dreieckförmig, bevorzugt mit abgerundeten Kanten, erscheinen.

Die Keile, insbesondere wenn sie mit dem zusammenwirkenden Profil ineinandergreifen, erzeugen eine besonders sichere seitliche Führung des Zugmittels auf der Laufrolle, während gleichzeitig gute Dämpfungseigenschaften erzielt werden können.

Der Laufflächenmantel und/oder die Zwischenschicht kann besonders bevorzugt durch Spritzgießen gefertigt werden.

Durch das Fertigen der Zwischenschicht wird in besonders bevorzugten Ausführungsformen eine Verbindung der Zwischenschicht mit dem Grundkörper und/oder eine Verbindung der Zwischenschicht mit dem Laufflächenmantel erzeugt.

Bevorzugt liegt also der Grundkörper und/oder der Laufflächenmantel vor, wenn die Zwischenschicht gefertigt wird, und die Verbindung der Zwischenschicht mit dem Grundkörper und/oder dem Laufflächenmantel entsteht während des Fertigungsschritts der Zwischenschicht.

Besonders bevorzugt kann der Laufflächenmantel um den Grundkörper in einer vorgesehenen Relativposition für die Laufrolle positioniert werden, bevor der die Zwischenschicht gefertigt wird.

Das Positionieren des Laufflächenmantels um den Grundkörper in der vorgesehenen Relativposition kann so verstanden werden, dass das Positionieren den üblichen fertigungstechnischen Ungenauigkeiten unterliegt. Außerdem kann durch den Fertigungsprozess der Zwischenschicht eine prozessbedingte Verschiebung des Laufflächenmantels geschehen.

Das Positionieren des Laufflächenmantels um den Grundkörper in der vorgesehenen Relativposition kann durch Einlegen des Grundkörpers und/oder des Laufflächenmantels in ein Formgebungswerkzeug (zweites Formwerkzeug), insbesondere ein Spritzgießwerkzeug, geschehen.

Sämtliche %-Angaben sind als Gew.-% zu verstehen.

Weitere Vorteile und Einzelheiten der Erfindung sind aus den Figuren sowie der dazugehörigen Figurenbeschreibung ersichtlich. Dabei zeigen:
- Fig. 1a bis 1d: schematisch ein erfindungsgemäßes Ausführungsbeispiel einer Laufrolle in verschiedenen Ansichten,
- Fig. 2a bis 2e: schematische Darstellungen zur Verdeutlichung eines erfindungsgemäßen Ausführungsbeispiels eines Verfahrens zum Herstellen einer Laufrolle,
- Fig. 3: schematisch ein erfindungsgemäßes Ausführungsbeispiel eines Aufzugs,
- Fig. 4a bis 4d: schematisch ein weiteres erfindungsgemäßes Ausführungsbeispiel einer Laufrolle in verschiedenen Ansichten,
- Fig. 5a bis 5d: schematisch ein weiteres erfindungsgemäßes Ausführungsbeispiel einer Laufrolle in verschiedenen Ansichten sowie
- Fig. 6a bis 6d: schematisch ein weiteres erfindungsgemäßes Ausführungsbeispiel einer Laufrolle in verschiedenen Ansichten,

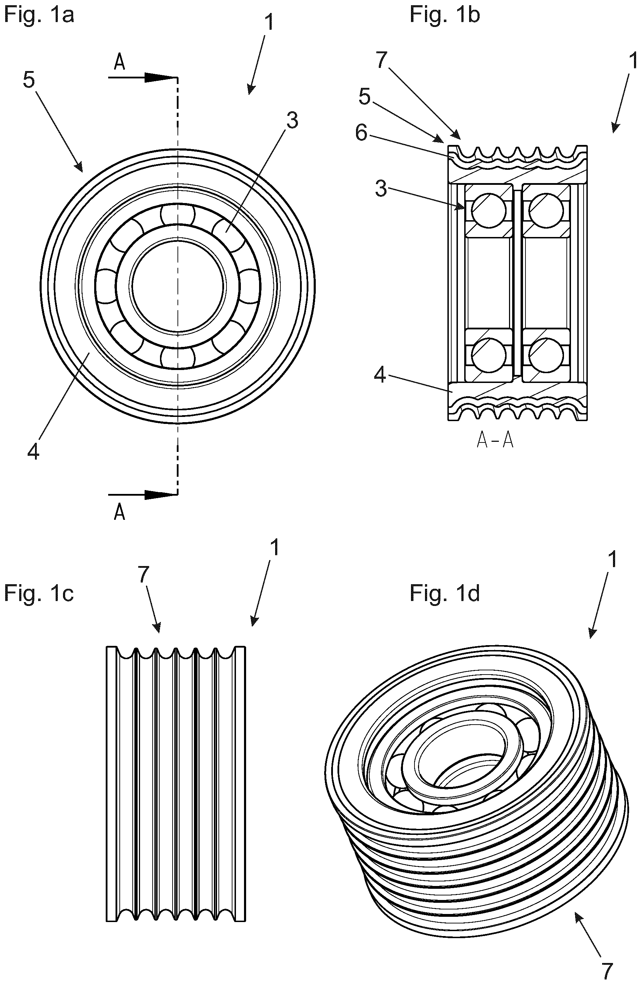

Ein erfindungsgemäßes Ausführungsbeispiel einer Laufrolle 1 ist schematisch dargestellt in Fig. 1a in einer Vorderansicht, in Fig. 1b einer Schnittdarstellung, Fig. 1c einer Seitenansicht sowie Fig. 1d in einer perspektivischen Darstellung.

Die Laufrolle 1 beinhaltet einen Grundköper 4 aus Stahl, in welchen zwei Lager 3, hier Kugellager, eingepresst sind.

Eine Lauffläche 7 der Laufrolle 1 ist durch einen Laufflächenmantel 5 gebildet, welcher durch einen Zwischenschicht 6 mit dem Grundkörper 4 verbunden ist.

Der Laufflächenmantel 5 ist in diesem Ausführungsbeispiel aus ultrahochmolekularem Polyethylen gefertigt (erster Kunststoff). Allfällige Additive machen bevorzugt weniger als 1 % aus.

Die Zwischenschicht 6 ist aus einem recycliertem Polyamid mit einer Glasfaserfüllung gefertigt. Allfällige Additive machen bevorzugt weniger als 1 % aus.

Die Lauffläche 7 beinhaltet ein erstes Keilprofil, welches mit einem oder mehreren Stahlseilen als Zugmittel 2 zusammenwirken kann.

Wie in Fig. 1b zu erkennen ist, besitzt der Grundkörper an seiner äußeren Fläche eine Mulde, in welcher die Zwischenschicht 6 teilweise angeordnet ist, sodass die Zwischenschicht zumindest formschlüssig mit dem Grundkörper 4 verbunden ist.

In analoger Weise ist der Laufflächenmantel 5 teilweise in einer umlaufenden Vertiefung der Zwischenschicht 6 angeordnet, sodass auch hier zumindest eine formschlüssige Verbindung besteht.

Der Grund der Mulde und/oder der Vertiefung ist in diesem Ausführungsbeispiel gewellt, d.h**.** nicht ganz flach ausgeführt. Die Wellenberge und Wellentäler entsprechen dabei in ihrer axialen Position Bergen und Tälern des ersten Keilprofils der Lauffläche 7, wie dies grundsätzlich aus der WO 2020/234172 A1 bekannt ist.

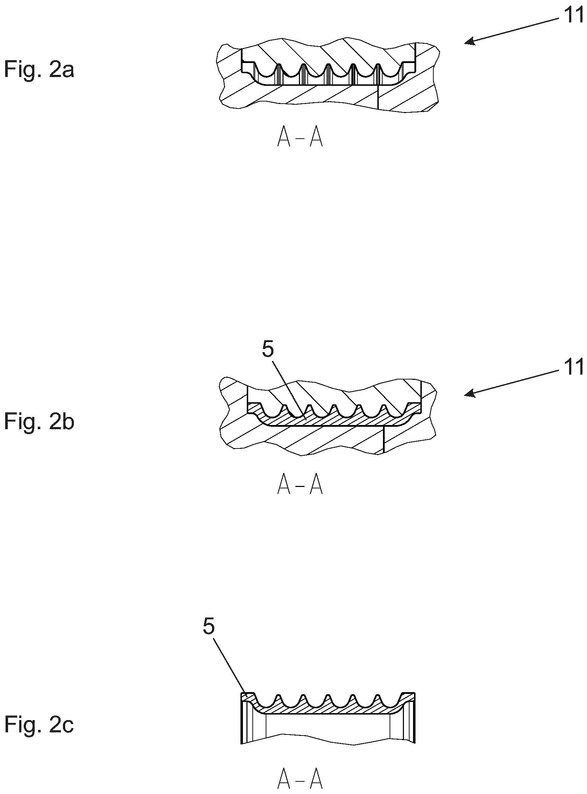

Die Figuren 2a bis 2e verdeutlichen schematisch Schritte eines erfindungsgemäßen Ausführungsbeispiels eines Verfahrens zum Herstellen einer Laufrolle 1.

Fig. 2a zeigt ein erstes Formgebungswerkzeug oder Formwerkzeug 11. Selbiges wird im Rahmen eines Spritzgießprozesses mit ultrahochmolekularem Polyethylen gefüllt, sodass der Zustand aus Fig. 2b vorliegt.

Der so gefertigte Laufflächenmantel 5 kühlt ab und wird aus dem ersten Formwerkzeug 11 entnommen (Fig. 2c). Im Formwerkzeug 11 und nach dem Entformen passiert der Schwund - das Zusammenziehen der Geometrie. Wäre hier ein Grundkörper 4 mit keinem oder geringem Schwund vorhanden, wäre der Schwund des Laufflächenmantels 5 verhindert, was im Material des Laufflächenmantels 5 innere Spannungen erzeugt, welche alleine gegebenenfalls mit den hinzukommenden Spannungen in der Anwendung die Festigkeit des Materials übersteigen können und somit zum Bruch des Laufflächenmantels 5 führen kann.

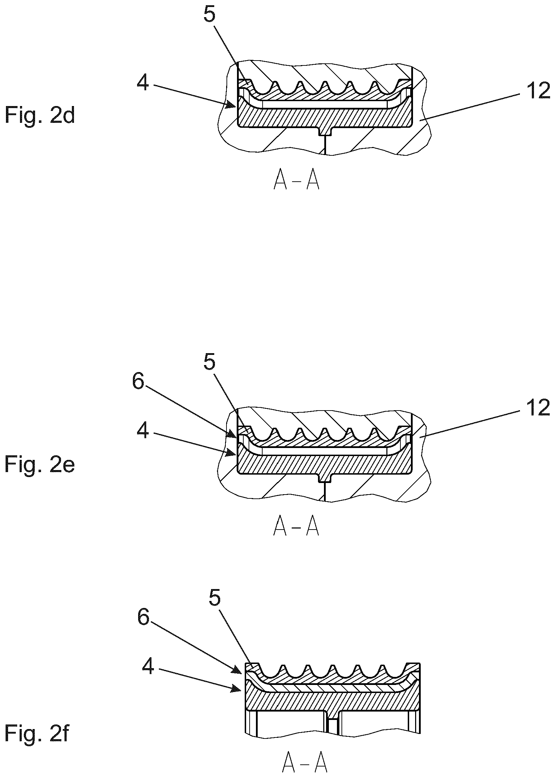

Danach wird der bereitgestellte Grundkörper 4 und der Laufflächenmantel 5 in ein zweites Formwerkzeug 12 eingelegt und zwar so, dass der Laufflächenmantel 5 bereits die für die Laufrolle vorgesehene Relativposition zum Grundkörper 4 einnimmt, wobei sich die Relativposition beispielsweise durch den folgenden weiteren Spritzgießprozess noch bis zu einem gewissen Grad ändern kann (Fig. 2d).

Der zwischen dem Grundkörper 4 und dem Laufflächenmantel 5 liegende Zwischenraum wird, wie in Fig. 2e ersichtlich, mit einem zweiten Kunststoff gefüllt, im vorliegenden Ausführungsbeispiel ein recycliertes Polyamid mit Glasfaserfüllung.

Nach dem Abkühlen und Entformen der Zwischenschicht 6 liegen der Grundkörper 4, die Zwischenschicht 6 und der Laufflächenmantel 5 als Verbundkörper vor, der in Fig. 2f im entformten Zustand dargestellt ist.

Zur Fertigstellung der Laufrolle 1 werden anschließend in an sich bekannter Weise die Lager 3 in den Grundkörper 4 eingepresst.

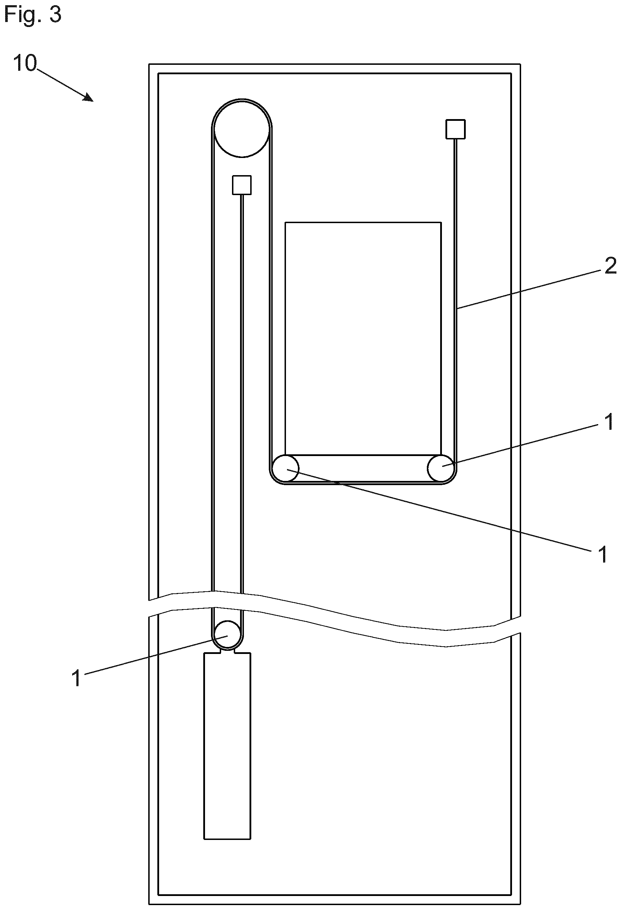

Fig. 3 zeigt schematisch ein erfindungsgemäßes Ausführungsbeispiel eines Aufzugs 10 mit mehreren Laufrollen 1, die mit einem Zugmittel 2 zusammenwirken.

Die Laufrollen sind in diesem Ausführungsbeispiel frei laufend.

Das Zugmittel kann beispielsweise ein Stahlseil, ein ummanteltes Stahlseil oder ein Riemen mit eingebettetem Stahlseil, oder eine andere denkbare und der Anwendung entsprechende Art eines Zugmittels sein. Beispielsweise können auch Riemen mit Glasfasern und/oder Aramidfasern als Stapelfasern, geschnittene Fasern, verzwirnte Fasern, Endlosfasern und oder Filamente zum Einsatz kommen.

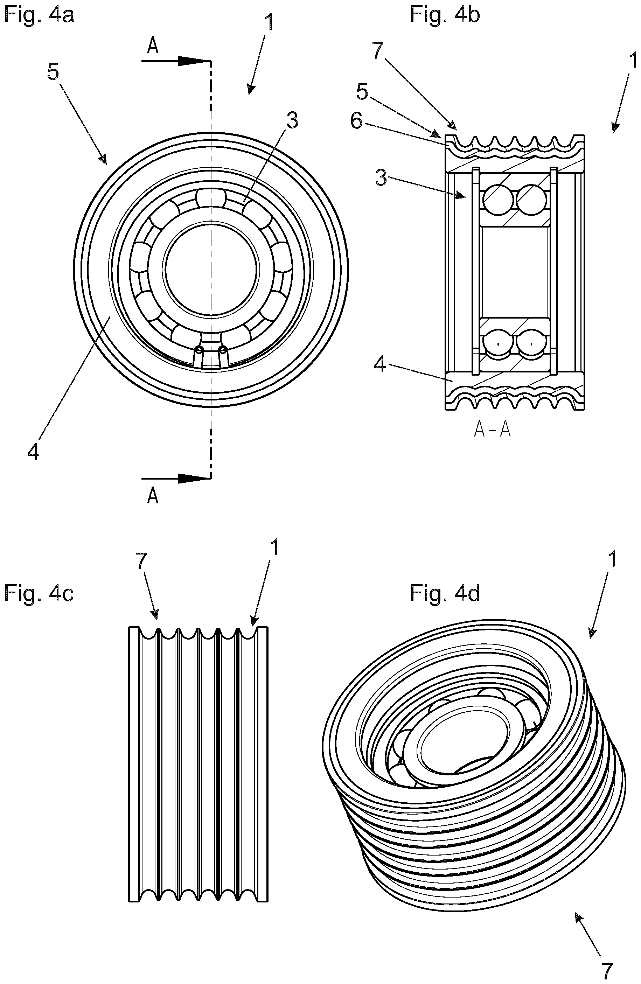

Die Fig. 4a bis 4d zeigen schematisch ein weiteres erfindungsgemäßes Ausführungsbeispiel, wobei im Vergleich zum Ausführungsbeispiel gemäß den Figuren 1a bis 1d doppelrillige Lager 3 zum Einsatz kommen. Darüber hinaus ist das Ausführungsbeispiel analog zu jenem aus den Fig. 1a bis 1d.

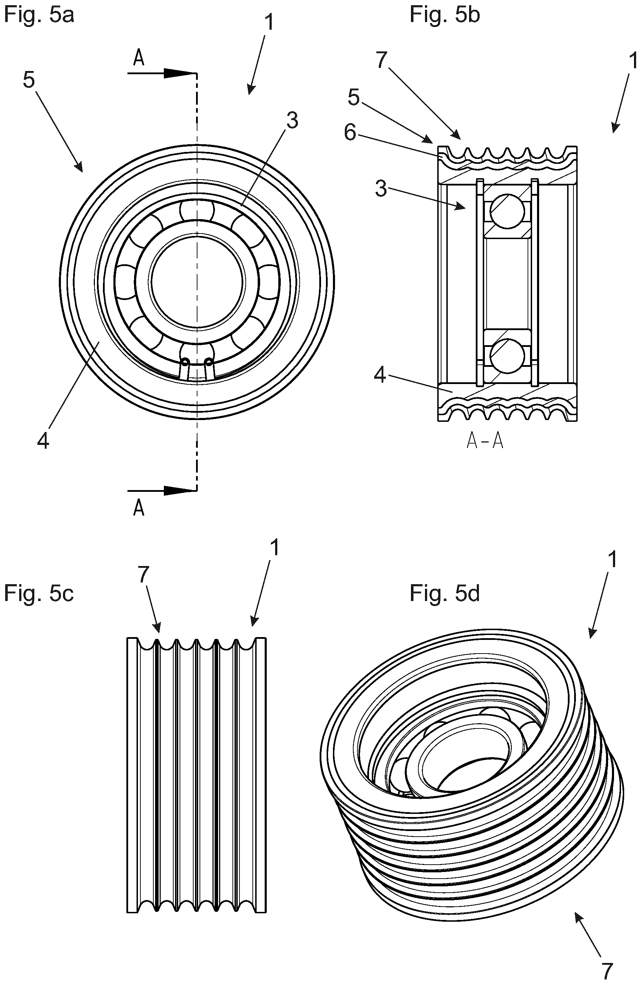

Die Fig. 5a bis 5d zeigen schematisch ein weiteres erfindungsgemäßes Ausführungsbeispiel, wobei im Vergleich zum Ausführungsbeispiel gemäß den Figuren 1a bis 1d nur ein Lager 3 zum Einsatz kommt. Darüber hinaus ist das Ausführungsbeispiel analog zu jenem aus den Fig. 1a bis 1d.

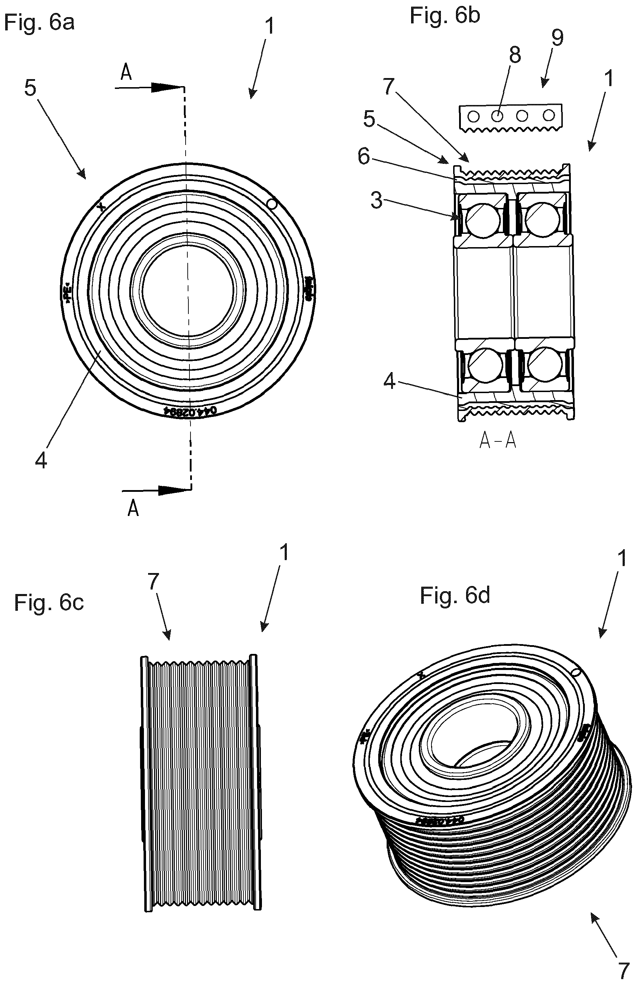

Die Fig. 6a bis 6d zeigen schematisch ein weiteres erfindungsgemäßes Ausführungsbeispiel, wobei im Vergleich zum Ausführungsbeispiel gemäß den Figuren 1a bis 1d vorgesehen ist, dass die Lauffläche 7 mit einem Riemen 9 statt einem Stahlseil als Zugmittel 2 zusammenwirkt.

Der Riemen 9 ist in Fig. 6b zusätzlich schematisch dargestellt.

Zu bemerken ist, dass im Riemen 9 Stahlseile 8 eingebettet sind.

Der Riemen beinhaltet ein Innenprofil, welches ein zweites Keilprofil beinhaltet und mit der Lauffläche 7 des Laufflächenmantels 5 zusammenwirkt.

Das erste Keilprofil der Lauffläche 7 korrespondiert mit dem zweiten Keilprofil des Innenprofils des Riemens 9.

Darüber hinaus ist das Ausführungsbeispiel aus den Fig. 6a bis 6d analog zu jenem aus den Fig. 1a bis 1d.

Zu erwähnen ist, dass gemäß der Erfindung auch Flachriemen ohne ein Innenprofil zum verwendet werden können, wobei die Laufrolle 1 wie im Stand der Technik an und für sich bekannt auf solche Flachriemen abgestimmt werden können.

### L e g e n d e zu den Hinweisziffern:

- 1: Laufrolle
- 2: Zugmittel
- 3: Lager
- 4: Grundkörper
- 5: Laufflächenmantel
- 6: Zwischenschicht
- 7: Lauffläche
- 8: Stahlseil
- 9: Riemen
- 10: Aufzug
- 11: erstes Formwerkzeug
- 12: zweites Formwerkzeug

## Patentansprüche

1. Laufrolle für ein Zugmittel (2) eines Aufzugs mit zumindest einem Lager (3), einem Grundkörper (4) und einem einen ersten Kunststoff aufweisenden Laufflächenmantel (5), wobei das zumindest eine Lager (3) durch den Grundkörper (4) gehalten ist, **dadurch gekennzeichnet, dass** zwischen dem Grundkörper (4) und dem Laufflächenmantel (5) eine mit dem Grundkörper (4) und dem Laufflächenmantel (5) verbundene Zwischenschicht (6) vorhanden ist, wobei die Zwischenschicht (6) einen sich vom ersten Kunststoff unterscheidenden zweiten Kunststoff beinhaltet.

2. Laufrolle nach Anspruch 1, wobei der erste Kunststoff ein thermoplastischer Kunststoff, bevorzugt ein ultrahochmolekulares Polyethylen, ist.

3. Laufrolle nach einem der vorhergehenden Ansprüche, wobei der Laufflächenmantel (5) zu mehr als 50 %, bevorzugt mehr als 75 %, besonders bevorzugt mehr als 90 % und ganz besonders bevorzugt mehr als 99 %, aus dem ersten Kunststoff besteht.

4. Laufrolle nach einem der vorhergehenden Ansprüche, wobei der zweite Kunststoff ein thermoplastischer Kunststoff, bevorzugt ein Polyamid, besonders bevorzugt ein recycliertes Polyamid, ist.

5. Laufrolle nach einem der vorhergehenden Ansprüche, wobei die Zwischensicht (6) zu mehr als 20 %, bevorzugt mehr als 30 % und besonders bevorzugt mehr als 40 %, aus dem zweiten Kunststoff besteht.

6. Laufrolle nach einem der vorhergehenden Ansprüche, wobei die Zwischenschicht (6) kann zu weniger als 80 %, bevorzugt weniger als 70% und besonders bevorzugt weniger als 60 %, aus dem zweiten Kunststoff besteht,

7. Laufrolle nach Anspruch 5 oder 6, wobei die Zwischenschicht (6) einen Füllstoff aufweist, bevorzugt in Form einer Glasfaserfüllung.

8. Laufrolle nach einem der vorhergehenden Ansprüche, wobei der Laufflächenmantel (5) eine Lauffläche (7) beinhaltet, die bevorzugt ein erstes Keilprofil beinhaltet.

9. Laufrolle nach einem der vorhergehenden Ansprüche, wobei das zumindest eine Lager (3) in den Grundkörper (4) integriert ist.

10. Aufzug mit zumindest einer Laufrolle (1) nach einem der vorhergehenden Ansprüche.

11. Aufzug nach Anspruch 10, wobei ein mit der zumindest einen Laufrolle (1) zusammenwirkendes Zugmittel (2) zumindest ein Stahlseil (8) beinhaltet, das bevorzugt in einen Riemen (9) eingebettet ist.

12. Aufzug nach Anspruch 11 mit zumindest einer Laufrolle nach Anspruch 7, wobei der Riemen (9) ein Innenprofil beinhaltet, welches mit der Lauffläche (7) des Laufflächenmantels (5) zusammenwirkt.

13. Aufzug nach Anspruch 12, wobei das Innenprofil ein zweites Keilprofil beinhaltet.

14. Aufzug nach Anspruch 12 oder 13, wobei die Lauffläche (7) mit dem Innenprofil korrespondiert, bevorzugt wobei das erste Keilprofil mit dem zweiten Keilprofil korrespondiert.

15. Verfahren zum Herstellen einer Laufrolle (1) für ein Zugmittel (2) eines Aufzugs (10), insbesondere zum Herstellen einer Laufrolle (1) gemäß einem der Ansprüche 1 bis 9, wobei zumindest folgende Schritte vorgesehen sind
- Bereitstellen eines Grundkörpers (4), bevorzugt samt zumindest einem darin montierten oder zu montierenden Lager (3),
- Fertigen eines Laufflächenmantels (5) zumindest teilweise aus einem ersten Kunststoff sowie
- Fertigen einer Zwischenschicht (6) zwischen dem Grundkörper (4) und dem Laufflächenmantel (5) zumindest teilweise aus einem sich vom ersten Kunststoff unterscheidenden zweiten Kunststoff.

16. Verfahren nach Anspruch 15, wobei der Laufflächenmantel (5) und/oder die Zwischenschicht (6) durch Spritzgießen gefertigt wird.

17. Verfahren nach Anspruch 15 oder 16, wobei durch das Fertigen der Zwischenschicht (6) eine Verbindung der Zwischenschicht (6) mit dem Grundkörper (4) und/oder eine Verbindung der Zwischenschicht (6) mit dem Laufflächenmantel (5) erzeugt wird.

18. Verfahren nach einem der Ansprüche 15 bis 17, wobei der Laufflächenmantel (5) um den Grundkörper (4) in einer vorgesehenen Relativposition für die Laufrolle (1) positioniert wird, bevor die Zwischenschicht (6) gefertigt wird.
